Europäisches Patentamt

European Patent Office

Office européen des brevets

(19)

(11) Publication number: **0 249 028 B1**

# EUROPEAN PATENT SPECIFICATION

(45) Date of publication of patent specification: **31.07.91**

(51) Int. Cl.⁵: **B60R 11/02**

(21) Application number: **87106586.8**

(22) Date of filing: **07.05.87**

(54) Motor vehicle comprising a dash panel with an incorporated radio receiver and with a seat for an extractable, personalisable cassette player.

(30) Priority: **13.05.86 IT 5339686 U**

(43) Date of publication of application:
**16.12.87 Bulletin 87/51**

(45) Publication of the grant of the patent:
· **31.07.91 Bulletin 91/31**

(84) Designated Contracting States:
**DE ES FR GB SE**

(56) References cited:
**EP-A- 0 108 270**
**EP-A- 0 141 468**
**EP-A- 0 195 972**
**US-A- 4 064 374**

(73) Proprietor: **FIAT AUTO S.p.A.**
**Corso Giovanni Agnelli 200**
**I-10135 Torino(IT)**

(72) Inventor: **De Bono Antonio**
**Via Caraglio 49**
**I-10100 Torino(IT)**
Inventor: **Trotta Ernesto**
**Corso Regina Margherita 238**
**I-10100 Torino(IT)**

(74) Representative: **Prato, Roberto et al**
**STUDIO TORTA Società Semplice Via Viotti 9**
**I-10121 Torino(IT)**

EP 0 249 028 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a motor vehicle comprising a dash panel with an incorporated radio receiver and with a seat for an extractable, personalisable cassette player.

Radio receivers or cassette players are frequently installed in motor vehicles, in particular in the instrument dash panel. Generally, these devices are either fixed or extractable to allow them to be removed to prevent their theft. In most cases, the vehicle is fitted only with a radio receiver, the cassette player being installed subsequently. Under such conditions, it is obviously advisable to remove both the cassette player and the radio receiver, unless this latter is incorporated into the vehicle dash panel. The need for the driver to always remove at least one of these devices for precautionary reasons represents an inconvenience.

The object of the present invention is to provide a motor vehicle fitted with a radio receiver and suitably arranged to house a cassette player in such a manner as to obviate the aforesaid drawback.

Said object is attained according to the present invention by a motor vehicle comprising

a dash panel which supports a radio receiver in a fixed manner and is provided with a seat for housing an extractable and removable cassette player; characterised by

a processing unit arranged to initially program a predetermined identification code in said cassette player, and then to enable said cassette player inserted into said seat to operate only after having verified the presence of said predetermined code in said cassette player.

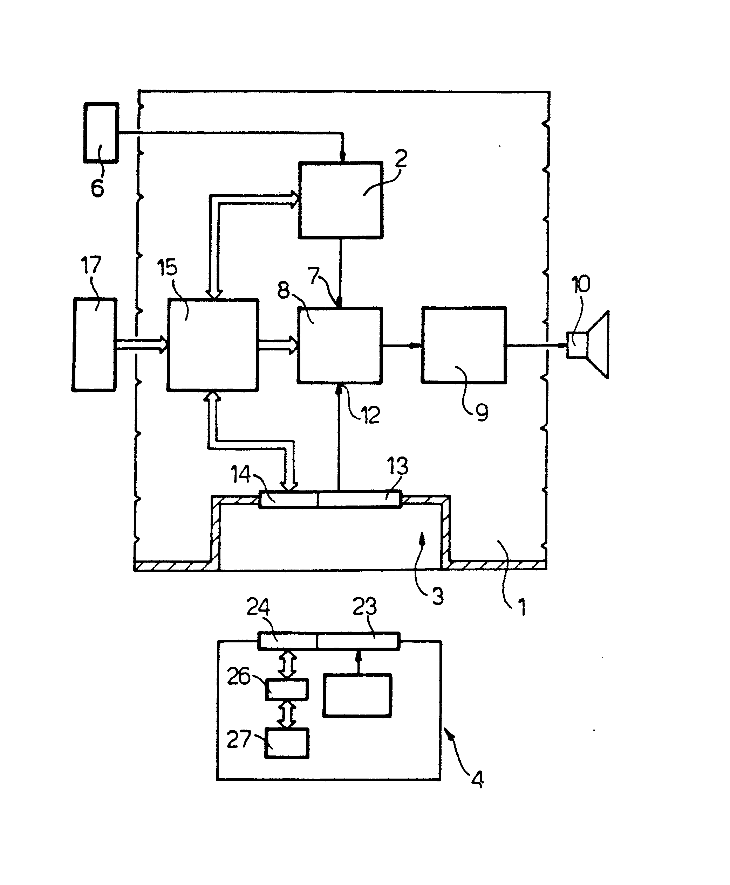

The present invention will be more apparent from the description of a preferred embodiment thereof given hereinafter by way of non-limiting example with reference to the diagram shown on the accompanying drawing.

In this diagram, the reference numeral 1 represents overall the dash panel of a motor vehicle (not shown), which supports a radio receiver 2 in a fixed manner and is also provided with a seat 3 able to house an extractable and removable cassette player 4. Conveniently, the radio receiver 2 is provided with a selection and adjustment unit 6 in the form for example of a pushbutton unit and knob, and disposed for example between the two front seats of the vehicle for easy operation both by the driver and by the passengers in the front and rear seats.

The output of the radio receiver 2 is connected to one input 7 of a switching unit 8, the output of which is connected by way of an amplifier 9 to a loudspeaker 10 conveniently mounted in the dash panel 1 or in a suitable position within the passenger compartment of the vehicle concerned.

A further input 12 of the switching unit 8 is connected to a connector 13 conveniently installed in the interior of the seat 3.

The radio receiver 2, the switching unit 8 and a further connector 14 installed to the side of the connector 13 in correspondence with the seat 3 are connected to a central processing unit 15 which conveniently comprises a microprocessor. The unit 15 can also be controlled by an input unit 17 conveniently in the form of a keyboard.

The cassette player 4 is provided with a pair of connectors 23, 24 arranged to engage respectively with the connectors 13 and 14 installed in the said seats 3. The connector 23 is connected to the output of a unit 25 of known type able to read the magnetic tapes inserted into the cassette player 4 by the driver. The connector 24 is connected by an input/output unit 26 to a memory 27 conveniently of the programmable read-only type (PROM). The radio receiver 2 and cassette player 4 are used in the following manner. In general, the vehicle is sold with the radio receiver 2 incorporated into the dash panel 1 and with the seat 3 already arranged to house the cassette player 4. After purchase, the cassette player 4 is inserted into the seat 3 of the dash panel 1 so that the cassette player connectors 23 and 24 engage with the connectors 13 and 14 disposed in said seat 3. By operating for example the input unit 17, the firm which has sold the vehicle personalises the cassette player 4 by transmitting in particular, by way of the processing unit 15 and input/output unit 26, a predetermined identification code which is memorised in the cassette player memory 27.

The cassette player 4 thus becomes personalised, and is usable only in combination with the radio receiver 2 mounted on the vehicle in which the personalisation has taken place. In this respect, the use of the radio receiver 2 or cassette player 4 is subject to the processing unit 15 feeding an enabling signal to the switching unit 8 to connect this latter respectively to the input 7 or input 12 according to whether the driver requires to use the radio receiver 2 or cassette player 4. In particular, the processing unit 15 enables the cassette player 4 to operate only after having verified the presence in the memory 27 of the predetermined code which has been previously memorised in said memory.

The advantages of the present invention are apparent from an examination of the characteristics of the described embodiment. In this respect, the cassette player 4 can operate only in association with the radio receiver 2 with which it was initially programmed. Consequently, if stolen, it cannot be used on an analogous vehicle provided with an analogous radio receiver, as its code memorised in the memory 27 would prevent its identification by the corresponding processing unit 15. Because of this, it is no longer strictly necessary to remove the cassette player 4 on leaving the vehicle, because this cassette player, being personalised, would be completely unusable either alone or installed in a vehicle of type analogous to that from which it has been stolen.

Finally, modifications can be made to the various components incorporated into the motor vehicle dash panel 1, but without leaving the scope of the claims.

## Claims

1. A motor vehicle comprising
a dash panel (1) which supports a radio receiver (2) in a fixed manner and is provided with a seat (3) for housing an extractable and removable cassette player (4); characterised by
a processing unit (15) arranged to initially program a predetermined identification code in said cassette player (4), and then to enable said cassette player (4) inserted into said seat (3) to operate only after having verified the presence of said predetermined code in said cassette player (4).

2. A motor vehicle as claimed in claim 1, characterised in that, in correspondence with said seat (3), connectors (13, 14) are disposed for engagement with respective connectors (23, 24) carried by said cassette player (4).

3. A motor vehicle as claimed in claim 2, characterised in that one connector (14) of said connectors (13, 14) located in said seat (3) is connected to said processing unit (15) and is arranged to engage with the corresponding said coonnector (24) carried by said cassette player (4) in order to transmit to a memory unit (27) of this latter said predetermined code.

4. A motor vehicle as claimed in claim 2 or 3, characterised in that one connector (13) of said connectors (13, 14) located in said seat (3) is connected to one input (12) of a switching unit (8) having a further input (7) connected to said radio receiver (2), its output connected to at least one loudspeaker (10) by way of amplifier means (9), and an enabling input connected to said processing unit (15); said connector (13) being arranged to engage a corresponding connector (23) of said cassette player (4) to receive from this latter electrical signals to be conveniently amplified in said amplification means (9) and converted into sound in said loudspeaker (10).

5. A motor vehicle as claimed in any one of the preceding claims, characterised in that said radio receiver (2) is provided with a control unit (6) conveniently located in said motor vehicle in a position intermediate between two front seats.

## Revendications

1. Un véhicule automobile comprenant:
un tableau de bord (1) supportant un récepteur radio (2) de façon fixe, et pourvu d'un logement (3) pour recevoir un lecteur de cassettes amovible et extractible (4); caractérisé par une unité centrale de traitement (15) agencée pour programmer initialement un code d'identification prédéterminé dans ledit lecteur de cassettes (4) et, ensuite, pour permettre audit lecteur de cassettes (4) inséré dans ledit logement (3), de ne pouvoir fonctionner qu'après avoir vérifié la présence dudit code prédéterminé dans ledit lecture de cassettes (4).

2. Un véhicule automobile selon la revendication 1, caractérisé en ce qu'en correspondance avec ledit logement (3), les connecteurs (13, 14) sont disposés pour venir en engagement avec les connecteurs respectifs (23, 24) portés par ledit lecteur de cassettes (4).

3. Un véhicule automobile selon la revendication 2, caractérisé en ce qu'un connecteur (14) desdits connecteurs (13, 14) prévus dans ledit logement (3) est relié à ladite unité centrale de traitement (15) et est agencé pour venir en engagement avec ledit connecteur correspondant (24) prévu dans ledit lecteur de cassettes (4), de manière à transmettre à une unité formant mémoire (27) de ce dernier ledit code prédéterminé.

4. Un véhicule automobile selon la revendication 2 ou 3, caractérisé en ce qu'un connecteur (13) desdits connecteurs (13, 14) prévus dans ledit logement (3) est relié à une entrée (12) d'une unité de commutation (8) comportant une entrée supplémentaire (7) reliée audit récepteur radio (2), dont la sortie est reliée au moins à un haut-parleur (10) par l'intermédiaire de moyens formant amplificateur (9), et une entrée de validation reliée à ladite unité centrale de traitement (15); ledit connecteur 13 étant agencé pour être relié à un connecteur correspondant (23) dudit lecteur de cassettes (4) afin de recevoir de ce dernier des signaux électriques destinés à être convenablement amplifiés dans lesdits moyens formant amplificateur (9) et convertis en son dans ledit haut-parleur (10).

5. Un véhicule automobile selon l'une quelconque des précédentes revendications, caractérisé en ce que ledit récepteur radio (2) est pourvu d'une unité de commande (6) convenablement disposée dans ledit véhicule automobile, dans une position intermédiaire entre deux sièges avant.

**Patentansprüche**

1. Kraftfahrzeug, aufweisend ein Instrumentenbrett (1), das einen Funkempfänger (2) in einer stationären Art trägt und mit einer Aufnahme (3) zum Unterbringen eines ausziehbaren und entnehmbaren Kassettenspielers (4) versehen ist, gekennzeichnet durch eine Verarbeitungseinheit (15), die vorgesehen ist, einen anfänglichen vorbestimmten Identifikationscode in den Kassettenspieler (4) zu programmieren und dann zu ermöglichen, den Kassettenspieler (4), der in die Aufnahme (3) eingeschoben ist, nur nachdem das Vorhandensein des vorbestimmten Codes im Kassettenspieler (4) nachgeprüft ist, zu betätigen.

2. Kraftfahrzeug nach Anspruch 1, dadurch gekennzeichnet, daß in Übereinstimmung mit der Aufnahme (3) Verbindungsstücke (13, 14) zum Eingriff mit entsprechenden Verbindungsstükken (23, 24), die durch den Kassettenspieler (4) getragen werden, angeordnet sind.

3. Kraftfahrzeug nach Anspruch 2, dadurch gekennzeichnet, daß ein Verbindungsstück (14) der Verbindungsstücke (13, 14), die in der Aufnahme (3) angeordnet sind, mit der Verarbeitungseinheit (15) verbunden und vorgesehen ist, in Eingriff mit dem korrespondierenden Verbindungsstück (24) zu kommen, das durch den Kassettenspieler (4) getragen wird, um den vorbestimmten Code zu einer Speichereinheit (27) des letzteren zu übertragen.

4. Kraftfahrzeug nach Anspruch 2 oder 3, dadurch gekennzeichnet, daß ein Verbindungsstück (13) der Verbindungsstücke (13, 14), die in der Aufnahme (3) angeordnet sind, mit einem Eingang (12) einer Schalteinheit (8), die einen weiteren mit dem Funkempfänger (2) verbundenen Eingang (7) aufweist, deren Ausgang mit zumindest einem Lautsprecher (10) durch Verstärkermittel (9) verknüpft ist, und einem mit der Steuereinheit (15) verbundenen Freigabeeingang verbunden ist; daß das Verbindungsstück (13) vorgesehen ist, in ein korrespondierendes Verbindungsstück (23) des Kassettenspielers (4) einzugreifen, um von letzterem elektrische Signale zu empfangen, die genügend im Verstärkermittel (9) verstärkt und in Geräusche in dem Lautsprecher (10) umgewandelt werden.

5. Kraftfahrzeug nach irgend einem der vorangegangenen Ansprüche, dadurch gekennzeichnet, daß der Funkempfänger (2) mit einer Steuereinheit (6) versehen ist, die an einer geeigneten Stelle des Kraftfahrzeuges zwischen den beiden Vordersitzen eingebracht ist.